# EUROPÄISCHE PATENTSCHRIFT

(11) **EP 2 153 031 B1**
(45) Veröffentlichungstag und Bekanntmachung des Hinweises auf die Patenterteilung: **17.07.2013**
(21) Anmeldenummer: 08759982.5
(22) Anmeldetag: 23.05.2008
(51) Int. Cl.: F01M 11/00

(54) **ÖLWANNE FÜR EINE BRENNKRAFTMASCHINE-GETRIEBE-EINHEIT**
OIL PAN FOR AN INTERNAL COMBUSTION ENGINE TRANSMISSION UNIT
CARTER D'HUILE POUR UNE UNITÉ MOTEUR À COMBUSTION INTERNE- BOITE DE VITESSES

(30) Priorität: 13.06.2007 DE 202007008481 U
(43) Veröffentlichungstag der Anmeldung: 17.02.2010
(73) Patentinhaber: Mann + Hummel GmbH, 71638 Ludwigsburg (DE)
(72) Erfinder: JESSBERGER, Thomas, 71679 Asperg (DE); BAUMANN, Christoph, 71706 Markgröningen (DE); HEINSCH, Thomas, 74343 Sachsenheim (DE); SALOM, Rafael, 71686 Remseck (DE)
(86) Internationale Anmeldenummer: PCT/EP2008/056382
(87) Internationale Veröffentlichungsnummer: WO 2008/151916

(56) Entgegenhaltungen:
- EP-A- 1 070 834
- EP-A- 1 469 169
- EP-A- 1 526 258
- EP-A- 1 647 680
- FR-A- 2 171 539
- US-A- 4 770 276
- US-B1- 6 584 950

## Beschreibung

### Technisches Gebiet

Die Erfindung bezieht sich auf eine Ölwanne für eine Brennkraftmaschine-Getriebe-Einheit nach dem Oberhegriff des Anspruches 1.

### Stand der Technik

Aus der EP 0 811 761 A1 ist eine Ölwanne für ein Antriebsaggregat für Kraftfahrzeuge bekannt, die ein Ölwanriengehäuse, das an der Unterseite des Motorblocks der Brennkraftmaschine zu befestigen ist, sowie einen Gitterrahmen umfasst, der auf der Außenseite des Ölwannengehäuses angeordnet ist und das Ölwannengehäuse einfasst. Der Gitterrahmen besteht aus einem biegefesten Material und stützt und schützt das Ölwannengehäuse, das aus einem weichelastischen Kunststoff gefertigt ist. Die Befestigung des Gitterrahmens erfolgt gemeinsam mit dem Ölwannengehäuse durch Verschrauben über fluchtende Bohrungen im Ölwannengehäuse und In einem umlaufenden Flansch des Gitterrahmens mit dem Motorblock.

Zusätzlich kann der Gitterrahmen über einen teilkreisförmigen Verbindungsflansch mit dem Getriebegehäuse des unmittelbar sich an den Motorblock anschließenden Getriebes verbunden werden. Bei der Demontage der Ölwanne, insbesondere zu Wartungszwecken, Ist es erforderlich, den Gitterrahmen sowohl vom Motorblock als auch vom Getrlebegehäuse zu lösen, um auch das Ölwannengehäuse entnehmen zu können. Hierdurch erhöht sich der Wartungsaufwand.
Die Schrift FR2171539A offenbart eine Ölwanne, die an einem Trägerflansch befestigt ist, der an einen Motorblock einer Brennkraftmaschine montiert ist und Aufnahmen zur Verbindung mit einem Getriebe ausbildet.
In der EP1070834A1 ist eine Ölwanne gezeigt, die an einem Trägerrahmen befestigt ist, der an einen Motorblock einer Brennkraftmaschine montiert ist. Der Trägerrahmen weist Aufnahmen zur Abstützung eines Getriebes auf.

### Offenbarung der Erfindung

Der Erfindung liegt die Aufgabe zugrunde, eine Ölwanne für eine Brennkraftmaschine-Getriebe-Einheit mit einfachen konstruktiven Maßnahmen in der Weise auszubilden, dass sowohl die Montage als auch die Demontage mit geringem Aufwand durchgeführt werden kann.

Diese Aufgabe wird erfindungsgemäß mit den Merkmalen des Anspruches 1 gelöst. Die Unteransprüche geben zweckmäßige Weiterbildungen an.

Die erfindungsgemäße Ölwanne für eine Brennkraftmaschine-Getriebe-Einheit umfasst ein Ölwannengehäuse, welches auf der Unterseite des Motorblocks anzuordnen und mit diesem zu verbinden ist, sowie einen Trägerflansch, der Träger des Ölwannengehäuses ist und mit dem Getriebegehäuse verbunden wird. Die Kopplung des Ölwannengehäuses an den Trägerflansch erfolgt über eine lösbare Verbindungseinrichtung, die unabhängig von der Demontage des Trägerflansches vom Getriebegehäuse betätigt, also gelöst bzw. geschlossen werden kann. Dadurch wird die Möglichkeit eröffnen, insbesondere zu Wartungszwecken das Ölwannengehäuse aus seiner montierten Position zu lösen, ohne zugleich den Trägerflansch vom Getriebegehäuse entfernen zu müssen. Es müssen lediglich die Verbindungseinrichtungen zwischen dem Ölwannengehäuse und dem Trägerflansch gelöst werden, wobei auch noch eine unmittelbare Verbindung zwischen dem Ölwannengehäuse und dem Motorblock gelöst werden muss, damit das Ölwannengehäuse entnommen werden kann. In einer nicht beanspruchten Ausführungsform reicht es aber auch aus, das Ölwannengehäuse ausschlieβlich am Trägerflansch zu befestigen, ohne das Ölwannengehäuse direkt mit dem weiteren Bauteil, insbesondere dem Motorblock zu verbinden.

Insgesamt gestalten sich die Montage und die Demontage der erfindungsgemäßen Ölwanne sehr viel einfacher als im Stand der Technik, da der Trägerflansch auch bei Wartungsarbeiten in seiner Position am Getriebegehäuse verbleiben kann. Erfindungsgemäß wird das Ölwannengehäuse am Trägerflansch und auch am Motorblock verschraubt, wobei die Richtung sämtlicher Verschraubungseinrichtungen zweckmäßig einheitlich ist, insbesondere vertikal zur Unterseite des Motorblocks gerichtet ist, so dass alle Verbindungsschrauben in der gleichen Richtung eingeschraubt werden.

Der Trägerflansch kann gegebenenfalls auch zusätzlich am Motorblock befestigt werden, wodurch eine zusätzliche Versteifung der Brennkraftmaschine-Getriebe-Einheit erzielt wird. Diese Verbindung zwischen dem Trägerflansch und dem Motorblock erfolgt entweder unabhängig von der Verbindung zwischen dem Ölwannengehäuse und dem Motorblock oder aber, gemäß einer weiteren Ausführung, es handelt sich um eine gemeinsame Verbindung, insbesondere eine Schraubverbindung, bei der die Schrauben sowohl durch die Wandung des Ölwannengehäuses als auch durch den Trägerflansch geführt sind.

Gemäß bevorzugter Ausführung besteht der Trägerflansch aus Leichtmetall, insbesondere aus Aluminium. Das Ölwannengehäuse besteht erfindungsgemäß aus Kunststoff, insbesondere aus einem Spritzgusskunststoff. Des Weiteren kann es zweckmäßig sein, das Ölwannengehäuse zweiteilig auszubilden mit einem Oberteil und einem Unterteil, die insbesondere miteinander verschweißt sind, beispielsweise reibverschweißt sind. Die Zweiteilung des Ölwannengehäuses eröffnet die Möglichkeit, das Volumen der Ölwanne zu vergrößern, Indem das Unterteil des Gehäuses einen zusätzlichen Ölaufnahmeraum bietet. Das Unterteil erstreckt sich vorteilhaft nur über eine Teilfläche des Oberteils, wobei gegebenenfalls auch Ausführungen in Betracht kommen, bei denen das Oberteil und das Unterteil sich über die gleiche Querschnittsfläche erstrecken.

In das Ölwannengehäuse sind zweckmäßig Dome eingebracht, die Bestandtell einer Verschraubungseinrichtung zwischen dem Ölwannengehäuse und dem Motorblock und/oder dem Trägerflansch sind. Die Dome bieten eine Führung für die Schrauben und ermöglichen insbesondere sowohl eine Verschraubung des Unterteils als auch des Oberteils mit dem Motorblock bzw. dem Trägerflansch, wofür sich die Dome über die gesamte Höhe von Unterteil und Oberteil erstrecken. Damit ist es möglich, das Olwannengehäuse von unten an den Motorblock anzuschrauben. Zweckmäßigerweise sind die Dome im Unter- und Oberteil angegossen. Die Gesamthöhe der Dome setzt sich aus den Abschnitten im Unterteil und im Oberteil zusammen, die an der Verbindungsstelle zwischen Unter- und Oberteil zusammengefügt werden.

Des Weiteren kann es zweckmäßig sein, in der Verbindungseinrichtung zwischen Ölwannengehäuse und Trägerflansch Buchsen sowie zugeordnete Buchsenaufnahmen vorzusehen, wobei die Buchsen und die Buchsenaufnahmen im montierten Zustand in Überdeckung zu bringen sind und einen gemeinsamen Verschraubungskanal bilden. Dies eröffnet die Möglichkeit, das Ölwannengehäuse und den Trägerflansch als vormontiertes Modul auszubilden, indem die Buchsen und die Buchsenaufnahmen beispielsweise reib- oder formschlüssig miteinander verbunden werden, so dass diese beiden Bauteile auch ohne weitere Verbindungseinrichtungen aneinander gehalten sind. Beispielsweise können die Buchsen in die Buchsenaufnahmen mit Reibschluss eingeklemmt werden, wobei in diesem Zustand das Modul, bestehend aus Ölwannengehäuse und Trägerflansch, in die Montageposition gebracht und am Motorblock bzw. dem Getriebegehäuse montiert wird. Mit der Montage erfolgt zugleich die feste Verbindung zwischen dem Trägerflansch und dem Ölwannengehäuse.

Gemäß einer weiteren vorteilhaften Ausführung erstreckt sich Trägerflansch zumindest abschnittsweise in den Bereich zwischen dem Motorblock und dem Ölwannengehäuse hinein. Hierfür weist das Ölwannengehäuse zweckmäßig eine dem Trägerflansch angepasste Ausnehmung bzw. einen Absatz auf, die bzw. der in montierter Position von einem Teil des Trägerflansches eingenommen wird.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Brennkraftmaschine-Getriebe-Einheit mit einer Brennkraftmaschine, einem Getriebe sowie einer Ölwanne, die an den Motorblock der Brennkraftmaschine zu montieren ist, wobei das Ölwannengehäuse über einen Trägerflansch am Getriebegehäuse zu befestigen ist,
- Fig. 2: eine Einzeldarstellung der Ölwanne, mit einem zweiteiligen Ölwannengehäuse, bestehend aus Oberteil und Unterteil, und dem Trägerflansch, der mit dem Oberteil verbunden ist,
- Fig. 3: eine perspektivische Darstellung des Trägerflansches mit insgesamt vier mit Kreisen gekennzeichneten Verschraubungsbuchsen und einem Trägerflansch-Befestigungspunkt,
- Fig. 4: eine perspektivische Darstellung des Oberteils des Ölwannengehäuses mit ebenfalls vier mit Kreisen gekennzeichneten Buchsenaufnahmen, die im montierten Zustand mit den Verschraubungsbuchsen im Trägerflansch in einer fluchtenden Position liegen,
- Fig. 5: eine perspektivische Darstellung des Innenraums des Ölwannengehäuses mit mehreren Verschraubungsdomen, über die das Ölwannengehäuse unmittelbar mit dem Motorblock zu verschrauben ist.

In den Figuren sind gleiche Bauteile mit gleichen Bezugszeichen versehen.

### Ausführungsform(en) der Erfindung

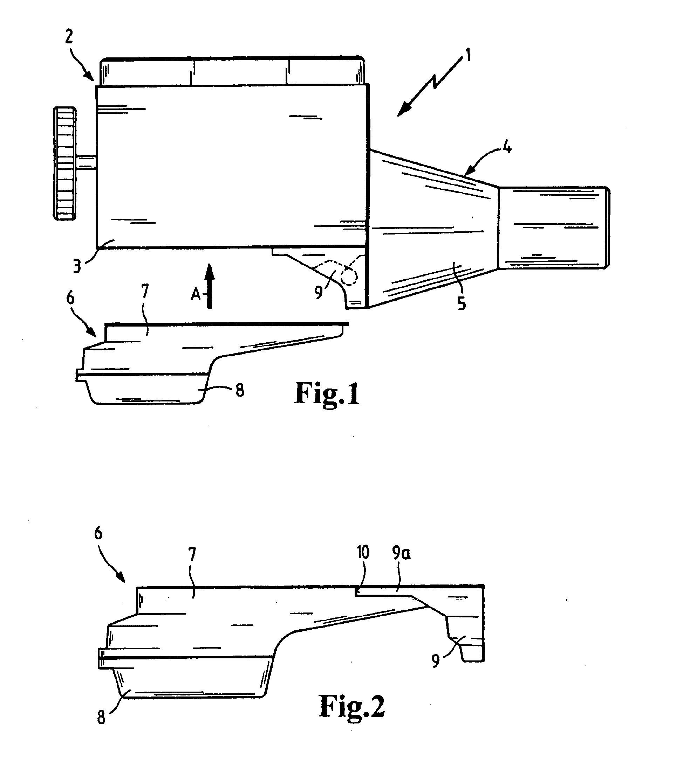

Wie Fig. 1 zu entnehmen, umfasst die Brennkraftmaschine-Getriebe-Einheit 1 eine Brennkraftmaschine 2 mit einem Motorblock 3 sowie ein Getriebe 4 in einem Getriebegehäuse 5, wobei das Getriebegehäuse 5 mit dem Motorblock 3 verbunden ist. Des Weiteren ist eine Ölwanne 6 vorgesehen, die auf der Unterseite des Motorblocks 3 zu befestigen ist und zweiteilig mit einem Oberteil 7 und einem Unterteil 8 aufgebaut ist. Das Ölwannengehäuse mit Oberteil 7 und Unterteil 8 besteht zweckmäßig aus Kunststoff, das Ölwannengehäuse ist wie mit dem Pfeil angegeben in die Montageposition zu verbringen. Der Ölwanne 6 ist außerdem ein Trägerflansch 9 zugeordnet, der winkelförmig ausgebildet ist und im Absatz zwischen dem Motorblock 3 und dem Getriebegehäuse 5 angeordnet ist und zumindest mit dem Getriebegehäuse, zweckmäßigerweise aber auch mit dem Motorblock zu verbinden ist.

Wie Fig. 2 zu entnehmen, ist in der montierten Lage das Oberteil 7 des Ölwannengehäuses mit dem Trägerflansch 9 verbunden. Der Trägerflansch 9 weist einen seitlich ausragenden Abschnitt 9a auf, der in einen zurückgesetzten Absatz 10 im Oberteil 7 des Ölwannengehäuses einragt, dergestalt, dass bei montiertem Ölwannengehäuse am Trägerflansch 9 eine glatte, durchgehende Oberseite gebildet ist, die in Anlage an die Unterseite des Motorblocks zu bringen ist. Das Ölwannengehäuse ist lösbar mit dem Trägerflansch 9 zu verbinden. Die Verbindungsrichtung erfolgt insbesondere in der Montagerichtung des Ölwannengehäuses, also senkrecht von unten nach oben. Zugleich ist es möglich, den Trägerflansch 9 zur Verbindung mit dem Getriebegehäuse 5 mit Verbindungseinrichtungen auszustatten, welche in Querrichtung wirksam sind, beispielsweise über in Querrichtung verlaufende Schrauben. Da die Montage und Demontage des Ölwannengehäuses am bzw. vom Trägerflansch 9 unabhängig von dessen Befestigung am Getriebegehäuse und/oder am Motorblock ist, kann für Wartungszwecke das Ölwannengehäuse mit dem Oberteil 7 und dem Unterteil 8 mit geringem Aufwand vom Trägerflansch 9 und vom Motorblock 3 gelöst werden, ohne zugleich den Trägerflansch vom Getriebegehäuse entfernen zu müssen.

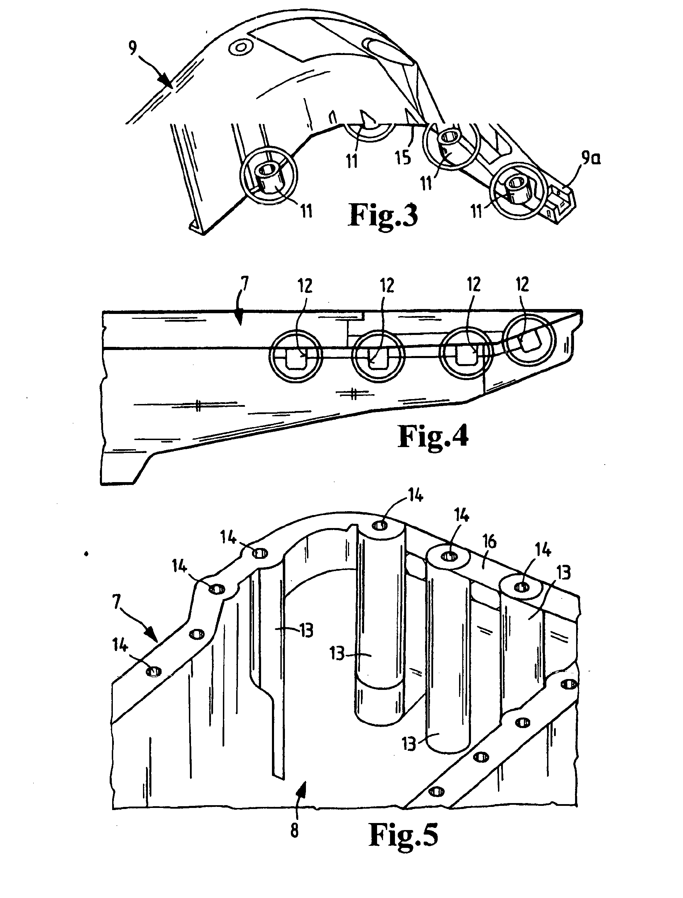

Wie den Fig. 3 und 4 zu entnehmen, folgt die Verbindung zwischen dem Trägerflansch 9 und dem Oberteil 7 des Ölwannengehäuses über Buchsen 11 am Trägerflansch und zugeordnete Buchsenaufnahmen 12 am Oberteil. Die Buchsen 11 und die Buchsenaufnahmen 12 sind in den Figuren jeweils gesondert gekennzeichnet. Bei montierter Ölwanne liegen die Buchsen 11 in den jeweiligen Buchsenaufnahmen 12 und bilden einen gemeinsamen, durchgehenden Verschraubungskanal zur Aufnahme einer Schraube. Die Buchsen 11 befinden sich am Trägerflansch 9 und erstrecken sich über Eck, Gleiches gilt für die Buchsenaufnahmen 12 am Oberteil 7 des Ölwannengehäuses.

Die Buchsen 11 sind insbesondere auch ohne sonstige Verschraubungs- bzw. Verbindungseinrichtungen form- bzw. reibschlüssig in die Buchsenaufnahmen 12 einzusetzen. Hierdurch wird die Möglichkeit geschaffen, noch vor der Montage ein zusammenhängendes Modul, bestehend aus dem Ölwannengehäuse und dem Trägerflansch 9, zu schaffen, das in die Montageposition an der Unterseite des Motorblocks bzw. des Getriebegehäuses zu verbringen ist.

In Fig. 3 ist ein Befestigungspunkt 15 zu erkennen, über den der Trägerflansch 9 nach der Demontage der Ölwanne am Motorblock gehalten ist. Zweckmäßig sind zumindest zwei Befestigungspunkte 15 am Trägerflansch vorgesehen.

Wie Fig. 5 zu entnehmen, weist das Oberteil 7 des Ölwannengehäuses einen umlaufenden Befestigungsrand bzw.-flansch auf, in den eine Mehrzahl von Ausnehmungen 14 eingebracht sind, über die das Oberteil mit dem Motorblock zu verschrauben ist. Des Weiteren sind Befestigungsdome 13 vorgesehen, die sich ausgehend vom Unterteil 8, welches fest mit dem Oberteil 7 verbunden ist, über die gesamte Höhe des Ölwannengehäuses erstrecken. Die Dome 13 sind im Unterteil und im Oberteil angegossen und werden an der Verbindungsstelle zwischen Unter- und Oberteil zusammengefügt. Die Befestigungsdome 13 besitzen ebenfalls Ausnehmungen 14, um eine Verschraubung mit dem Motorblock zu ermöglichen, der hierzu ein korrespondierendes Lochbild aufweist.

## Patentansprüche

1. Ölwanne für eine Brennkraftmaschine-Getriebe-Einheit (1), mit einem Ölwannengehäuse (7, 8) und einer Trägereinrichtung (9), über die das Ölwannengehäuse (7, 8) mit dem Getriebegehäuse (5) des Getriebes (4) zu verbinden ist, wobei die Trägereinrichtung als Trägerflansch (9) ausgebildet ist, der am dem Getriebegehäuse (5) des Getriebes (4) befestigt ist und an dem über eine lösbare Verbindungseinrichtung das Ölwannengehäuse (7, 8) gehalten ist, die Verbindungseinrichtung zwischen Ölwannengehäuse (7, 8) und Trägerflansch (9) zur Montage und Demontage des Ölwannengehäuses (7, 8) unabhängig von der Demontage des Trägerflansches (9) vom Getriebegehäuse (5) zu lösen bzw. zu schließen ist, wobei das Ölwannengehäuse (7, 8) aus Kunststoff besteht, **dadurch gekennzeichnet, dass** das Ölwannengehäuse (7, 8) unmittelbar am Motorblock (3) zu befestigen ist.

2. Ölwanne nach Anspruch 1, **dadurch gekennzeichnet, dass** der Trägerflansch (9) zusätzlich am Motorblock (3) zu befestigen ist.

3. Ölwanne nach Anspruch 1 oder 2, **dadurch gekennzeichnet, dass** der Trägerflansch (9) aus Metall, insbesondere Leichtmetall wie Aluminium besteht.

4. Ölwanne nach einem der Ansprüche 1 bis 3, **dadurch gekennzeichnet, dass** das Ölwannengehäuse (7, 8) zweiteilig aufgebaut ist und ein Oberteil (7) und ein Unterteil (8) umfasst.

5. Ölwanne nach Anspruch 4, **dadurch gekennzeichnet, dass** das Oberteil (7) und ein Unterteil (8) des Ölwannengehäuses miteinander verschweißt sind.

6. Ölwanne nach Anspruch 5, **dadurch gekennzeichnet, dass** in das Ölwannengehäuse (7, 8) Dome (13) für Schrauben eingebracht sind, über die das Ölwannengehäuse (7, 8) mit dem Motorblock (3) zu verschrauben ist.

7. Ölwanne nach Anspruch 4, **dadurch gekennzeichnet, dass** die Dome (13) sich über das Unterteil (7) und das Oberteil (8) des Ölwannengehäuses erstrecken.

8. Ölwanne nach einem der Ansprüche 1 bis 7, **dadurch gekennzeichnet, dass** die Verbindungseinrichtung zwischen Ölwannengehäuse (7, 8) und Trägerflansch (9) Buchsen (11) und zugeordnete Buchsenaufnahmen (12) umfasst, die in Überdeckung zu bringen sind und gemeinsam einen Verschraubungskanal bilden.

9. Ölwanne nach Anspruch 8, **dadurch gekennzeichnet, dass** die Buchsen (11) und die Buchsenaufnahmen (12) reib- oder formschlüssig miteinander zu verbinden sind.

10. Ölwanne nach einem der Ansprüche 1 bis 9, **dadurch gekennzeichnet, dass** der Trägerflansch (9) sich zumindest abschnittsweise zwischen dem Motorblock (3) und dem Ölwannengehäuse (7, 8) erstreckt.

## Claims

1. Oil pan for a gear transmission unit of an internal combustion engine (1),
with an oil pan housing (7, 8) and a supporting device (9) via which the oil pan housing (7, 8) is to be connected with the gear transmission housing (5) of the gear transmission (4), the supporting device being designed as supporting flange (9) which is attached to the gear transmission housing (5) of the gear transmission (4) and on which the oil pan housing (7, 8) is held by a detachable connecting device, the connecting device between oil pan housing (7, 8) and supporting flange (9) for assembling and disassembling the oil pan housing (7, 8) being detached and closed independently of disassembling the supporting flange (9) from the gear transmission housing (5), the oil pan housing (7, 8) being made of synthetic material, **characterized in that** the oil pan housing (7, 8) is to be attached immediately at the engine block (3).

2. Oil pan according to claim 1, **characterized in that** the supporting flange (9) is to be additionally attached to the engine block (3).

3. Oil pan according to claim 1 or 2, **characterized in that** the supporting flange (9) is made of metal, in particular of light metal such as aluminum.

4. Oil pan according to one of the claims 1 to 3, **characterized in that** the oil pan housing (7, 8) is made of two parts and comprises an upper section (7) and a bottom section (8).

5. Oil pan according to claim 4, **characterized in that** the upper section (7) and one bottom section (8) of the oil pan housing are welded with each other.

6. Oil pan according to claim 5, **characterized in that** mounting pods (13) for screws are inserted into the oil pan housing (7, 8) by means of which the oil pan housing (7, 8) is to be screwed with the engine block (3).

7. Oil pan according to claim 4, **characterized in that** the mounting pods (13) extend over the bottom section (7) and the upper section (8) of the oil pan housing.

8. Oil pan according to one of the claims 1 to 7, **characterized in that** the connecting device between oil pan housing (7, 8) and supporting flange (9) comprises bushings (11) and corresponding bushing receivers (12) which are to be overlapped and form together a screw channel.

9. Oil pan according to claim 8, **characterized in that** the bushings (11) and the bushing receivers (12) are to be connected with each other by friction or positive fitting.

10. Oil pan according to one of the claims 1 to 9, **characterized in that** the
supporting flange (9) extends at least sectionwise between the engine block (3) and the oil pan housing (7, 8).

## Revendications

1. Bac à huile pour une unité d'entraînement d'un moteur à combustion interne (1), avec un boîtier de bac à huile (7, 8) et un dispositif de support (9) par l'intermédiaire duquel le boîtier de bac à huile (7, 8) doit être relié au carter de boîte de vitesses (5) de la boîte de vitesses (4), le dispositif de support étant exécuté en tant que flasque de support (9) qui est fixé au carter de boîte de vitesses (5) de la boîte de vitesses (4) et sur lequel est maintenu le boîtier de bac à huile (7, 8) par un dispositif de jonction amovible, le dispositif de jonction entre le boîtier de bac à huile (7, 8) et le flasque de support (9) pouvant être desserré et serré, pour le montage et
le démontage du boîtier de bac à huile (7, 8) sans avoir à démonter le flasque de support (9) du carter de boîte de vitesses (5), le boîtier de bac à huile (7, 8) étant en matière plastique, **caractérisé en ce que** le boîtier de bac à huile (7, 8) doit être fixé directement sur le bloc du moteur (3).

2. Bac à huile selon la revendication 1, **caractérisé en ce que** le flasque de support (9) doit aussi être fixé au bloc du moteur (3).

3. Bac à huile selon la revendication 1 ou 2, **caractérisé en ce que** le flasque de support (9) est en métal, notamment en métal léger, p. ex. en aluminium.

4. Bac à huile selon l'une des revendications 1 à 3, **caractérisé en ce que** le boîtier de bac à huile (7, 8) est divisé en deux parties et comporte une partie supérieure (7) et une partie inférieure (8).

5. Bac à huile selon la revendication 4, **caractérisé en ce que** la partie supérieure (7) et une partie inférieure (8) du boîtier de bac à huile sont soudées l'une à l'autre.

6. Bac à huile selon la revendication 5, **caractérisé en ce que** des cosses de fixation (13) pour des vis sont montées dans le boîtier de bac à huile (7, 8), au moyen desquelles le boîtier de bac à huile (7, 8) doit être vissé au bloc du moteur (3).

7. Bac à huile selon la revendication 4, **caractérisé en ce que** les cosses de fixation (13) s'étendent au-dessus de la partie inférieure (7) et de la partie supérieure (8) du boîtier de bac à huile.

8. Bac à huile selon l'une des revendications 1 à 7, **caractérisé en ce que** le dispositif de jonction comprend entre le boîtier de bac à huile (7, 8) et le flasque de support (9) des douilles (11) et des logements de douilles (12) correspondants qui doivent être superposés et forment ensemble un canal de vissage.

9. Bac à huile selon la revendication 8, **caractérisé en ce que** les douilles (11) et les logements de douilles (12) doivent être assemblés les unes aux autres par friction ou par crabotage.

10. Bac à huile selon l'une des revendications 1 à 9, **caractérisé en ce que** le flasque de support (9) s'étend, au moins de manière zonale, entre le bloc du moteur (3) et le boîtier de bac à huile (7, 8).
